# EUROPEAN PATENT SPECIFICATION

(11) **EP 3 290 548 B1**
(45) Date of publication and mention of the grant of the patent: **03.04.2019**
(21) Application number: 17188419.0
(22) Date of filing: 29.08.2017
(51) Int. Cl.: C25D 11/24, C25D 11/26, C25D 11/30

(54) **METHOD FOR PRODUCING HEAT-SHIELDING FILM**
VERFAHREN ZUR HERSTELLUNG EINES HITZESCHILDFILMS
PROCÉDÉ DE PRODUCTION D'UN FILM DE PROTECTION THERMIQUE

(30) Priority: 29.08.2016 JP 2016167092
(43) Date of publication of application: 07.03.2018
(73) Proprietor: TOYOTA JIDOSHA KABUSHIKI KAISHA, Toyota-shi, Aichi-ken 471-8571 (JP)
(72) Inventor: YAMASHITA, Hideo, Toyota-shi, Aichi-ken 471-8571 (JP)
(74) Representative: D Young & Co LLP

(56) References cited:
- WO-A2-2013/038249
- JP-A- 2009 280 716
- US-A1- 2016 130 716

## Description

### Cross-Reference to Related Application

The present application claims priority to Japanese Patent Applications No. 2016-167092, filed on August 29, 2016.

### Technical Field

The present disclosure relates to a method for producing a heat-shielding film, in particular, a method for producing a heat-shielding film provided on a constitutional surface of a combustion chamber of an engine.

### Background

In general, when a cylinder head and a cylinder block are assembled together, a combustion chamber of an engine is defined as a space surrounded by the bore surface of the cylinder block, the top surface of a piston enclosed by the bore surface, the bottom surface of the cylinder head, and the bottom surfaces of the head parts of an intake valve and an exhaust valve provided in a prescribed location in the cylinder head. On the constitutional surface of such a combustion chamber, a heat-shielding film is sometimes provided, for the purpose of reducing the cooling loss in the engine, or protecting the engine from the heat generated by the combustion of fuel.

JP 2010-249008 A discloses a technique for providing an anodic oxide film as a heat-shielding film, on the constitutional surface of the combustion chamber of an engine. The anodic oxide film has a thermal conductivity lower than the thermal conductivities of the base materials (for example, an aluminum alloy, a magnesium alloy, a titanium alloy) of the parts constituting the combustion chamber. Consequently, the anodic oxide film allows the heat-shielding property of the combustion chamber to be improved and the cooling loss to be reduced. In addition, the anodic oxide film has a volume heat capacity lower than the volume heat capacities of the above-described base materials. Accordingly, the anodic oxide film also allows the surface temperature of the film to be made to follow the temperature of the working gas in the combustion chamber. Specifically, the surface temperature of the film can be made to follow the intake temperature in the intake stroke, and the temperature of the combustion gas in the expansion stroke. Accordingly, the anodic oxide film allows the cooling loss in the expansion stroke to be reduced, and at the same time, allows the heating of the working gas in the intake stroke to be suppressed and the fuel consumption to be improved.

JP 2010-249008 A also discloses that it is preferable to perform a treatment of sealing innumerable pores formed on the top surface of the anodic oxide film (pore sealing treatment). As an example of the pore sealing treatment, JP 2010-249008 A introduces a method in which an organic silicon solution is applied as a pore sealing agent to the top surface of the anodic oxide film, and heated so as to form a silicon-based oxide film.

JP 2010-249008 A describes the possibility of the pore size regulation by varying the conditions (the applied voltage, the type of the electrolyte solution) of the anode oxidation treatment. However, it is difficult to uniformize the sizes of all the pores, size differences inevitably occur. In such a case, even when an organic silicon solution is used, it is impossible to completely seal the openings of the large-size pores. This is because even when the organic silicon solution can be filled in the openings at the application step, the volume of the organic silicon solution is reduced as much as the solvent removed in the subsequent heating process.

The present disclosure addresses the above-described problems, and an object of the present disclosure is to provide a production method capable of satisfactorily sealing all the openings of the innumerable pores formed on the top surface of the anodic oxide film.
WO 2013/038249 A2 discloses an internal combustion engine and method for manufacturing the same.
US 2016/130716 A1 discloses a forming method of thermal insulation film.
JP 2009 280716 A discloses solventless, one-pack and normal-temperature curing impregnation material.

### Summary

The present disclosure is a method for producing a heat-shielding film for achieving the above-described object, and comprises an anode oxidation step, a first pore sealing step and a second pore sealing step. The anode oxidation step is a step of forming an anodic oxide film having a top surface provided with innumerable pores formed thereon, by the anode oxidation treatment of the part constituting the combustion chamber of an engine. The first pore sealing step is a step of forming a first silicon-based oxide film by applying, to the top surface of the anodic oxide film, a solvent-typed first pore sealing agent including polysilazane and an organic solvent, and by the polymerization of the polysilazane involving the removal of the organic solvent of the first pore sealing agent. The second pore sealing step is a step of forming a second silicon-based oxide film by applying, to the top surface of the first silicon-based oxide film, a non-solvent-typed second pore sealing agent including an alkoxysilane compound represented by the following chemical formula (1) or a partially hydrolyzed condensate thereof, and by the polymerization of at least one of the alkoxysilane compound and the partially hydrolyzed condensate thereof:

R¹ₙSi(OR²)₄₋ₙ (1)

(In formula (1), R¹ represents a substituted or unsubstituted monovalent hydrocarbon group having 1 to 8 carbon atoms, R² represents an alkyl group having 1 to 4 carbon atoms and n represents an integer of 0 to 3.)

The present disclosure may comprise a third pore sealing step. The third pore sealing step is a step of forming the third silicon-based oxide film by applying, on the top surface of the second silicon-based oxide film, a solvent-typed third pore sealing agent including polysilazane and an organic solvent, by the polymerization of the polysilazane involving the removal of the organic solvent of the third pore sealing agent. When the present disclosure comprises the third pore sealing step, the second pore sealing step and the third pore sealing step may be alternately performed at least once or more. In addition, the final run of the third pore sealing step may be performed later than the final run of the second pore sealing step.

In the present disclosure, the polysilazane included in the third pore sealing agent applied in the final run of the third pore sealing step may be perhydropolysilazane.

According to the present disclosure, the second pore sealing step allows the second silicon-based oxide film to be formed from the non-solvent-typed second pore sealing agent. The volume of the solvent-typed first pore sealing agent is reduced during the formation of the first silicon-based oxide film because of involving the removal of the organic solvent. The volume of the second pore sealing agent is not almost reduced during the formation of the second silicon-based oxide film. Accordingly, even when the openings of the large-size pores cannot be blocked by the first silicon-based oxide film, the openings of the large-size pores can be blocked certainly by the second silicon-based oxide film.

When the present disclosure comprises the third pore sealing step, and the final run of the third pore sealing step is performed later than the final run of the second pore sealing step, the top surface of the heat-shielding film can be constituted with the third silicon-based oxide film. The polymer constituting the third silicon-based oxide film is a polymer derived from polysilazane, and is excellent in heat resistance as compared with the polymer constituting the second silicon-based oxide film. Accordingly, as compared with the case where the top surface of the heat-shielding film is constituted with the second silicon-based oxide film, the heat resistance of the top surface concerned can be improved.

In the present disclosure, when the polysilazane included in the third pore sealing agent applied in the final run of the third pore sealing step is perhydropolysilazane, the top surface of the heat-shielding film can be constituted with a silica glass, and accordingly the heat resistance of the top surface concerned can be particularly improved.

### Brief Description of Drawings

Fig. 1 is a diagram illustrating the flow of the method for producing a heat-shielding film according to a first embodiment of the present disclosure;
Fig. 2 is a cross-sectional schematic diagram of an anodic oxide film formed on the base material of a combustion chamber part;
Fig. 3 is a cross-sectional schematic diagram of an anodic oxide film on which a first silicon-based oxide film is formed;
Fig. 4 is a diagram schematically illustrating the reaction of perhydropolysilazane;
Fig. 5 is a cross-sectional schematic diagram of an anodic oxide film on which a second silicon-based oxide film is formed;
Fig. 6 is a diagram schematically illustrating the reaction of alkoxysilane compounds;
Fig. 7 is a diagram schematically illustrating the top surface of an anodic oxide film before a pore sealing treatment;
Fig. 8 is a diagram illustrating the problematic points in the case where the openings of open pores or crack openings are incompletely blocked;
Fig. 9 is a diagram illustrating the effects due to the production method according to the first embodiment of the present disclosure;
Fig. 10 is a diagram illustrating the flow of the method for producing a heat-shielding film according to a second embodiment of the present disclosure; and
Fig. 11 is a cross-sectional schematic diagram of an anodic oxide film on which a third silicon-based oxide film is formed.

### Description of Embodiments

Hereinafter, the embodiments of the present disclosure are described with reference to the accompanying drawings. It is to be noted that the common elements in the drawings are denoted by the same reference signs and the duplicate descriptions thereof are omitted. The present disclosure is not limited by the following embodiments.

### First Embodiment

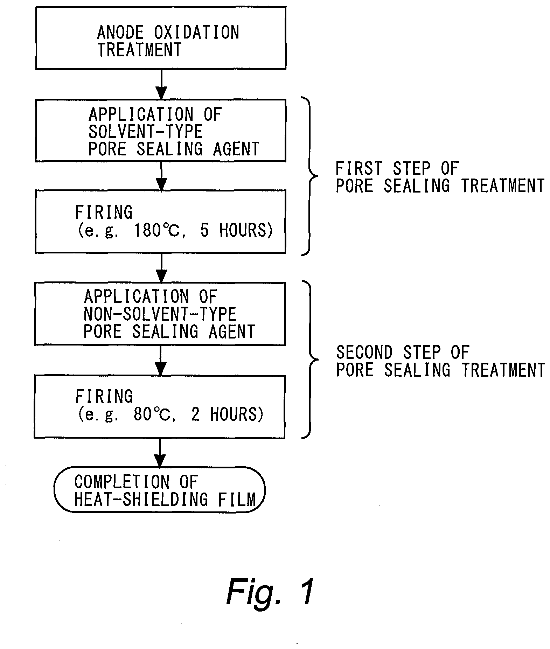

First, with reference to Figs. 1 to 9, the method for producing a heat-shielding film according to the first embodiment of the present disclosure is described.

### Description of Production Method

Fig. 1 is a diagram illustrating the flow of the method for producing a heat-shielding film according to the first embodiment of the present disclosure. In the production method according to the present first embodiment, first, an anode oxidation treatment of the part (hereinafter, referred to as a "combustion chamber part") constituting a combustion chamber of an engine is performed. As already described, the combustion chamber of an engine is defined as a space surrounded by the bore surface of the cylinder block, the top surface of a piston enclosed by the bore surface, the bottom surface of the cylinder head, and the bottom surfaces of the head parts of an intake valve and an exhaust valve provided in a prescribed location in the cylinder head. The combustion chamber part of the present first embodiment includes at least one of the cylinder block, the cylinder head, the piston, the intake valve and the exhaust valve.

The anode oxidation treatment is an electrolysis performed while an electrolyte solution (as an example, an aqueous solution of phosphoric acid, oxalic acid, sulfuric acid, or chromic acid) is being supplied to the surface of the combustion chamber part as an anode. During the electrolysis, the electric current density and the energization time are regulated. During the electrolysis, the contact area of the electrolyte solution is restricted by using, for example, a masking agent in such a way that only a predetermined area of the surface of the combustion chamber part undergoes the formation of the anodic oxide film. The base material of the combustion chamber part is, for example, an aluminum alloy, a magnesium alloy or a titanium alloy. Accordingly, when the anode oxidation treatment is performed, the oxide film of the alloy (namely, anodic oxide film) is formed in the above-described predetermined area.

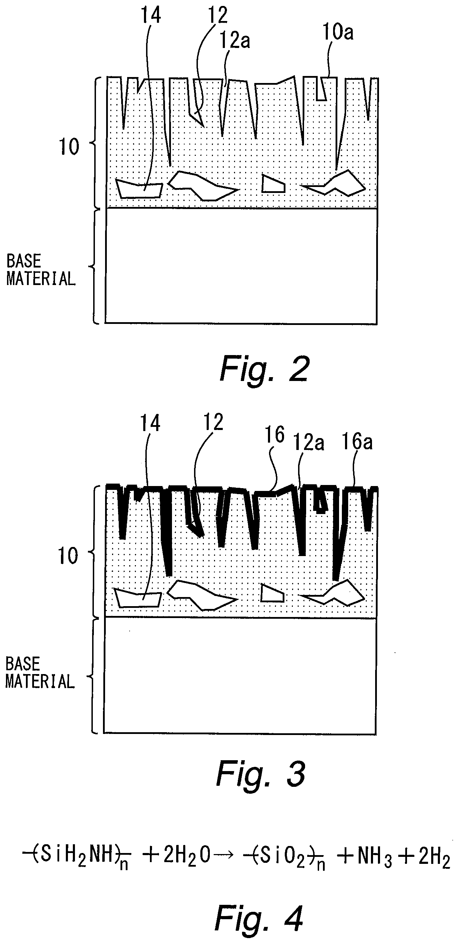

Fig. 2 is a cross-sectional schematic diagram of an anodic oxide film formed on the base material of a combustion chamber part. The anodic oxide film 10 shown in Fig. 2 has innumerable open pores 12 having openings on the top surface 10a. The open pores 12 are formed in the course of the anode oxidation treatment. The presence of the open pores 12 allows the anodic oxide film 10 to function as a heat-shielding film having a lower thermal conductivity and a lower volume heat capacity (meaning a heat capacity per unit volume; the same shall apply hereinafter) than those of the base material of the combustion chamber part. The anodic oxide film 10 has also closed pores 14 in the interior thereof. The closed pores 14 are formed in the course of the anode oxidation treatment, and are originated from the additives (mainly, Si) for improving the mechanical properties of the combustion chamber part. The presence of the closed pores 14 allows the low volume heat capacity of the anodic oxide film 10 to be actualized.

In the production method according to the present first embodiment, successively, the treatment (pore sealing treatment) for sealing the open pores 12 shown in Fig. 2 is performed. The pore sealing treatment is performed in order to enhance the heat-shielding property of the anodic oxide film 10 by blocking at least the openings 12a of the open pores 12 close to the top surface 10a. The pore sealing treatment comprises a first step and a second step. In the first step of the pore sealing treatment, first, a solvent-typed pore sealing agent (first pore sealing agent) is applied to all the area of the top surface 10a shown in Fig. 2. The solvent-typed pore sealing agent includes perhydropolysilazane and/or organopolysilazane (as an example, polydimethyl silazane or poly (dimethyl-methyl) silazane) and an organic solvent. The solvent-typed pore sealing agent may include, if necessary, an additive(s). Examples of the additive include a leveling agent, a surfactant and a viscosity modifier.

As an example of the solvent-typed pore sealing agent, Aquamica (registered trademark) manufactured by AZ Electronic Materials Co., Ltd. is quoted. Aquamica is a product prepared by diluting perhydropolysilazane with an ethereal solvent such as dibutyl ether or anisole.

The application method of the solvent-typed pore sealing agent is not particularly limited, and a heretofore known method can be used as the application method concerned. Examples of the heretofore known method include brush coating, spray coating, dip coating, float coating and spin coating. It is to be noted that the deposition of the pore sealing agent on the film surface during coating may unfortunately lead to the degradation of the surface roughness due to cracking or the increase of the volume heat capacity. Accordingly, when the solvent-typed pore sealing agent is deposited on the surface of the anodic oxide film, the deposited pore sealing agent may be wiped off, for example, by using waste cloth after the application of the pore sealing agent.

In the first step of the pore sealing treatment, successively, the firing of the solvent-typed pore sealing agent is performed. For example, the firing conditions are such that the temperature is set at 180°C and the firing time is set at 5 hours. By performing the firing of the solvent-typed pore sealing agent, the above-described organic solvent evaporates, and at the same time, the polysilazane is polycondensed. Consequently, on the top surface 10a shown in Fig. 2, a silicon-based oxide film (first silicon-based oxide film) is formed. Fig. 3 is a cross-sectional schematic diagram of an anodic oxide film on which a first silicon-based oxide film is formed. As shown in Fig. 3, the first silicon-based oxide film 16 is formed on the top surface 10a and the constitutional surface of the open pores 12. Consequently, most of the openings 12a are blocked by the first silicon-based oxide film 16.

Fig. 4 is a diagram schematically illustrating the reaction of perhydropolysilazane. As shown in Fig. 4, perhydropolysilazane is converted into silica glass while reacting with water (H₂O) and releasing ammonia (NH₃) and hydrogen (H₂). When above-described Aquamica is used as the solvent-typed pore sealing agent, perhydropolysilazane reacts with the moisture in the atmosphere, and consequently the first silicon-based oxide film 16 composed of silica glass is formed.

In the second step of the pore sealing treatment, first, a non-solvent-typed pore sealing agent (second pore sealing agent) is applied to all the area of the top surface 16a of the first silicon-based oxide film 16 shown in Fig. 3. The non-solvent-typed pore sealing agent includes an alkoxysilane compound represented by the following chemical formula (1) or a partially hydrolyzed condensate (oligomer) thereof:

R¹ₙSi(OR²)₄₋ₙ (1)

(In formula (1), R¹ represents a substituted or unsubstituted monovalent hydrocarbon group having 1 to 8 carbon atoms, R² represents an alkyl group having 1 to 4 carbon atoms and n represents an integer of 0 to 3.)

The non-solvent-typed pore sealing agent may include, if necessary, a curing catalyst regulating the rate of the curing reaction, an inorganic pigment coloring the resulting pore sealing film and an inorganic additive(s). The curing catalyst, the inorganic pigment and the inorganic additive(s) are not particularly limited, and heretofore known products can be used. Examples of the curing catalyst include: organotin compounds such as dibutyltin dilaurate and dibutyltin diacetate; organotitanium compounds such as tetraisopropoxy titanium and tetra-n-butoxy titanium; organoaluminum compounds such as triisopropoxy aluminum and tri-n-butoxy aluminum; and organozirconium compounds such as tetra-n-butoxy zirconium and tetra-n-propoxy zirconium. Examples of the inorganic pigment include a metal, an alloy, and the oxide, hydroxide, carbide, sulfide and nitride of these metal and alloy. Examples of the additive include a gloss modifier and a viscosity modifier.

As an example of the non-solvent-typed pore sealing agent, Permeate (trade name) manufactured by D&D Corp. is quoted. Permeate is a non-solvent one-component pore sealing agent mainly composed of an alkoxysilane compound represented by the above-described chemical formula (1) or a partially hydrolyzed condensate thereof.

Similarly to the above-described solvent-typed pore sealing agent, the application method of the non-solvent-typed pore sealing agent is not particularly limited, and a heretofore known method can be used as the application method concerned. In addition, when the non-solvent-typed pore sealing agent is deposited on the surface of the first silicon-based oxide film, the deposited pore sealing agent may be wiped off, for example, by using waste cloth after the application of the non-solvent-typed pore sealing agent.

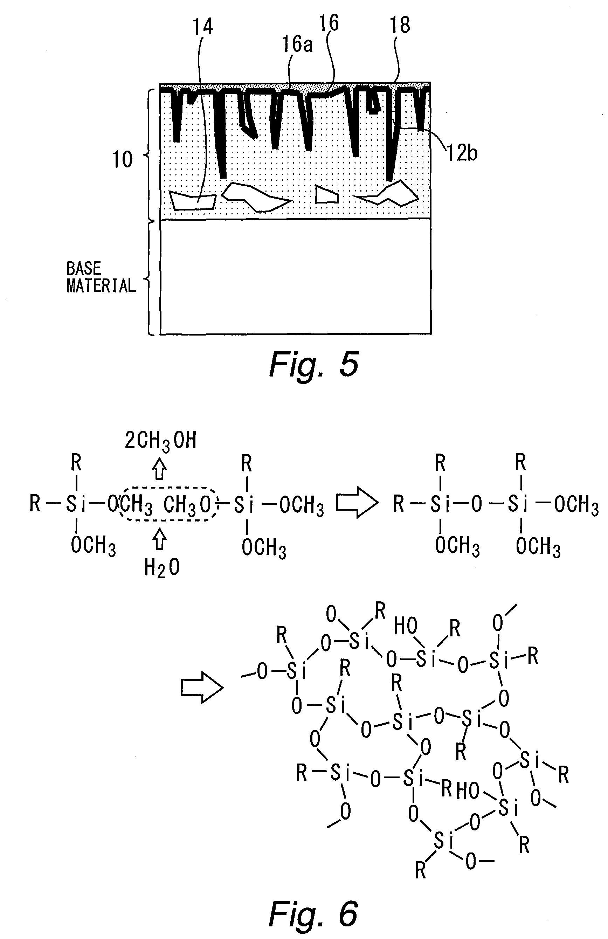

In the second step of the pore sealing treatment, successively, the firing of the non-solvent-typed pore sealing agent is performed. For example, the firing conditions are such that the temperature is set at 80°C and the firing time is set at 2 hours. By performing the firing of the non-solvent-typed pore sealing agent, the above-described alkoxysilane compound is polycondensed with itself, the above-described partially hydrolyzed condensate is polycondensed with itself or the alkoxysilane compound and the partially hydrolyzed condensate are polycondensed with each other. Consequently, there is formed a silicon-based oxide film (second silicon-based oxide film) other than the first silicon-based oxide film 16 covering the top surface 16a shown in Fig. 3. Fig. 5 is a cross-sectional schematic diagram of an anode oxide film on which a second silicon-based oxide film is formed. As shown in Fig. 5, the second silicon-based oxide film 18 is formed on the top surface 16a. Consequently, all the openings 12a shown in Fig. 2 and Fig. 3 are blocked by the second silicon-based oxide film 18. It is to be noted that Fig. 5 depicts the deep portion 12b of an open pore 12 not blocked by the second silicon-based oxide film 18. However, the formation of such a deep portion 12b itself causes no problem, and rather, when such a deep portion 12b functions similarly to the closed pores 14, such a deep portion 12b contributes to a low volume heat capacity of the heat-shielding film.

Fig. 6 is a diagram schematically illustrating the reaction of alkoxysilane compounds. As shown in Fig. 6, the alkoxysilane compound forms a network by reacting with water while releasing methanol (CH₃OH). When above-described Permeate is used as the non-solvent-typed pore sealing agent, the alkoxysilane compound or the partially hydrolyzed condensate thereof reacts with the moisture in the atmosphere, and consequently, formed is the second silicon-based oxide film 18 composed of an inorganic polymer having -Si-O-Si-O- as the main chain.

Due to the above-described anode oxidation treatment and the above-described pore sealing treatment, a heat-shielding film is formed on the base material of the combustion chamber part. By the way, the anodic oxide film 10, the first silicon-based oxide film 16 and the second silicon-based oxide film 18 shown in Fig. 5 correspond to the heat-shielding film obtained by the production method according to the present first embodiment.

### Effects of Production Method

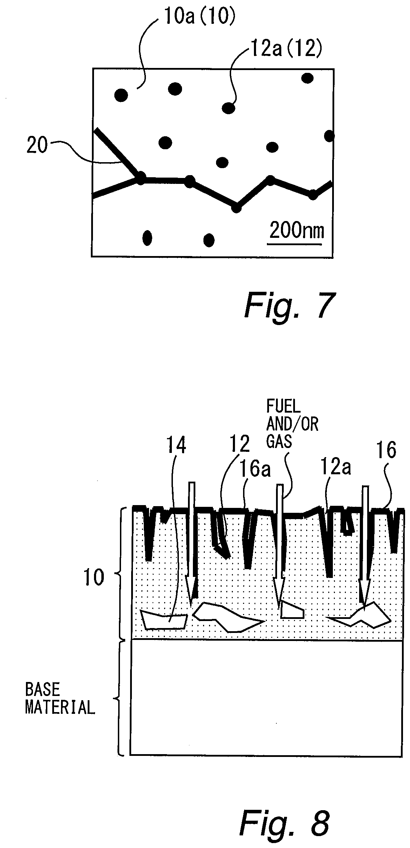

Fig. 7 is a diagram schematically illustrating the top surface of an anodic oxide film before a pore sealing treatment. As shown in Fig. 7, innumerable openings 12a are dotted about on the top surface 10a. When these openings 12a are compared with each other, it is found that there are differences in the sizes thereof. As shown in Fig. 7, a crack opening 20 is formed on the top surface 10a. The crack opening 20 can be created in the course of the formation of the open pores 12. Similarly to the sizes of the openings 12a, the size of the crack opening 20 is also varied, and the size of the crack opening 20 shown in Fig. 7 is larger than the maximum size of the openings 12a shown in the same figure.

When the sizes of the openings 12a are large, or when the crack opening 20 is formed, it is impossible to completely block the openings 12a or the crack opening 20 by the above-described first silicon-based oxide film 16. This is because even when a solvent-typed pore sealing agent can be filled in all the openings 12a or all the crack openings 20 in the application step, the volume of the pore sealing agent is reduced by the amount of the organic solvent evaporated in the subsequent firing step. When the volume of the pore sealing agent is decreased, the openings 12a and the crack openings 20 incompletely blocked by the first silicon-based oxide film 16 remain.

Fig. 8 is a diagram illustrating the problematic points in the case where the openings of the open pores or the crack openings are incompletely blocked. As the arrows indicate in Fig. 8, when the openings 12a are incompletely blocked, the combustion gas can invade into the incompletely blocked openings 12a. Accordingly, as compared with the case where the openings 12a are completely blocked, the heat-shielding property due to the anodic oxide film 10 or the followability to the working gas is degraded. Also, in the case of a gasoline engine, it is possible that the fuel invading into the incompletely blocked openings 12a does not contribute to the combustion and remains in the incompletely blocked openings 12a.

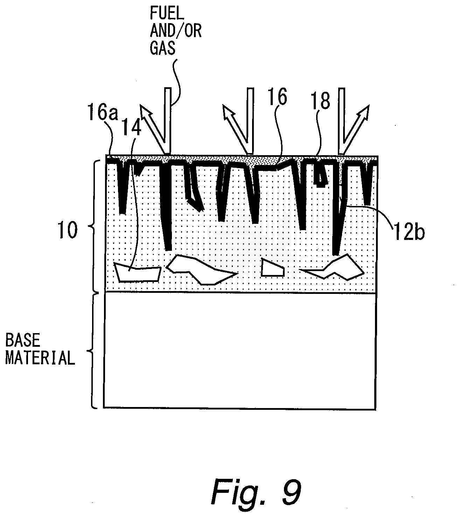

With respect to this point, in the production method according to the present first embodiment, the second step of the pore sealing treatment using a non-solvent-typed pore sealing agent is performed. In contrast to the solvent-typed pore sealing agent, the non-solvent-typed pore sealing agent is substantially free from the volume contraction in the application step or in the firing step. Consequently, even when the incompletely blocked openings 12a or the incompletely blocked crack openings 20 remain after the first step of the pore sealing treatment, these incompletely blocked openings can be certainly blocked by the second silicon-based oxide film 18. Fig. 9 is a diagram illustrating the effects due to the production method according to the first embodiment of the present disclosure. As the arrows indicate in Fig. 9, when all the openings 12a are blocked by the second silicon-based oxide film 18, the invasion of the combustion gas or the fuel can be blocked.

From the above description, according to the production method according to the present first embodiment, it is possible to obtain a heat-shielding film being excellent in the heat-shielding property and the followability to the working gas.

### Second Embodiment

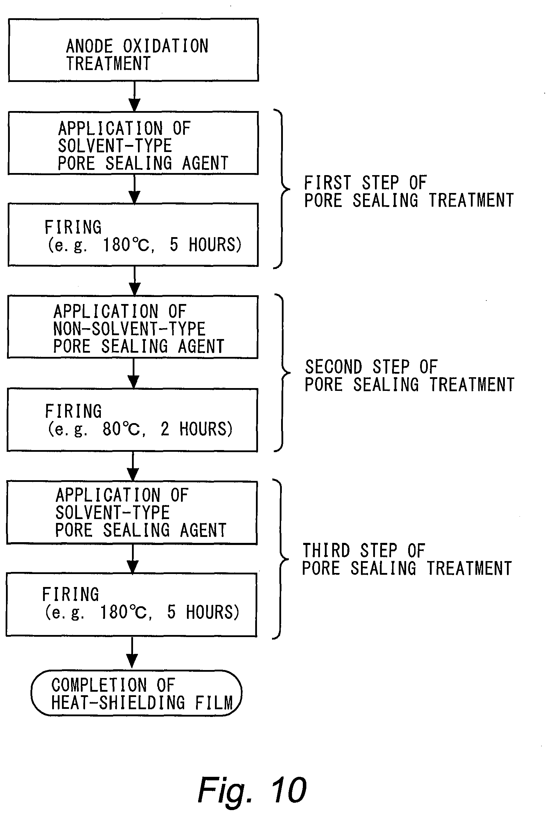

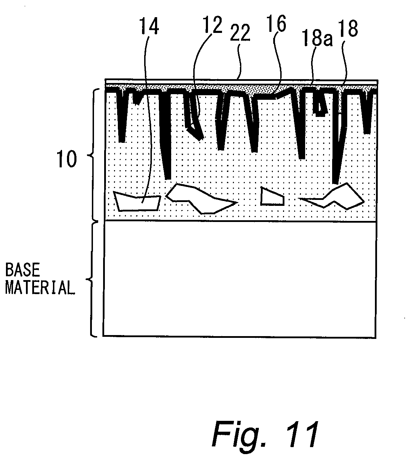

Next, with reference to Fig. 10 and Fig. 11, the method for producing a heat-shielding film according to the second embodiment of the present disclosure is described.

### Description of Production Method

Fig. 10 is a diagram illustrating the flow of the method for producing a heat-shielding film according to the second embodiment of the present disclosure. In the production method according to the present second embodiment, the pore sealing treatment comprises a first step, a second step and a third step. With respect to the anode oxidation treatment, and, the first step and the second step of the pore sealing treatment, the production method according to the second embodiment is common with the above-described production method according to the first embodiment. In other words, the production method according to the present second embodiment is different from the above-described production method of the first embodiment in that the third step of the pore sealing treatment is added. Accordingly, the description of the anode oxidation treatment, and the description of the first step and the second step of the pore sealing treatment are omitted, and hereinafter, only the description of the third step of the pore sealing treatment is presented.

The third step of the pore sealing treatment is fundamentally the same as the first step of the pore sealing treatment. Specifically, in the third step of the pore sealing treatment, first, a solvent-typed pore sealing agent (third pore sealing agent) is applied to all the area of the top surface 18a of the second silicon-based oxide film 18 shown in Fig. 5. The pore sealing agent used in the third step is of the same type as the pore sealing agent used in the first step. The application method of the pore sealing agent used in the third step is not particularly limited similarly to the application methods of the pore sealing agents used in the first step and the second step.

In the third step of the pore sealing treatment, successively, the firing of the solvent-typed pore sealing agent is performed. The firing conditions are the same as the firing conditions of the first step. By performing the firing of the solvent-typed pore sealing agent, the above-described organic solvent evaporates, and at the same time, polysilazane is polycondensed. Consequently, a silicon-based oxide film (third silicon-based oxide film) is formed on the top surface 18a shown in Fig. 5. Fig. 11 is a cross-sectional schematic diagram of the anodic oxide film on which the third silicon-based oxide film is formed. As shown in Fig. 11, the third silicon-based oxide film 22 is formed on the top surface 18a.

By the above-described anode oxidation treatment and the above-described pore sealing treatment, a heat-shielding film is formed on the base material of the combustion chamber part. By the way, the anodic oxide film 10, the first silicon-based oxide film 16, the second silicon-based oxide film 18 and the third silicon-based oxide film 22 shown in Fig. 11 correspond to the heat-shielding film obtained by the production method according to the present second embodiment.

### Effects of Production Method

As described in the above-described first embodiment, by performing the second step of the pore sealing treatment using the non-solvent-typed pore sealing agent, the incompletely blocked openings 12a can be certainly blocked by the second silicon-based oxide film 18. However, as can be seen from Fig. 6, the inorganic polymer constituting the second silicon-based oxide film 18 includes hydrocarbon groups in the side chains thereof. Accordingly, the inorganic polymer tends to have a lower melting temperature as compared with an inorganic polymer having no hydrocarbon groups at all in the side chains thereof. In fact, above-described Permeate has a melting temperature as low as approximately 500°C, and has a low hardness. Consequently, when the top surface of the heat-shielding film is constituted with the second silicon-based oxide film 18, an apprehension remains with respect to the heat resistance and the hardness.

From this aspect, in the production method according to the present second embodiment, the third step is performed subsequent to second step. The inorganic polymer constituting the third silicon-based oxide film 22 has a higher melting point and a sufficiently higher hardness as compared with the inorganic polymer constituting the second silicon-based oxide film 18. In particular, the above-described silica glass formed from perhydropolysilazane has a melting point as high as approximately 1000°C. In this way, according to the production method according to the present second embodiment, by the third step forming the third silicon-based oxide film 22, it is possible to obtain a heat-shielding film having a high real machine durability, and being enhanced in the heat resistance and the hardness of the top surface of the heat-shielding film.

### Other Examples of Production Method

By the way, in the above-described production method according to the second embodiment, a pore sealing film having a three-layered structure composed of the first silicon-based oxide film 16, the second silicon-based oxide film 18 and the third silicon-based oxide film 22. However, the number of the steps in the pore sealing treatment may be further increased, and a pore sealing film having more than three layers may also be formed. However, in this case, it is preferable to alternately perform the step according to the second step and the step according to the third step. It is also preferable to perform the pore sealing treatment in such a way the step according to the third step is the final step of the pore sealing treatment. By performing such a pore sealing treatment, it is possible to obtain the same effects as in the above-described production method according to the second embodiment.

## Claims

1. A method for producing a heat-shielding film comprising the steps of:
forming an anodic oxide film (10) having a top surface (10a) provided with innumerable pores (12) formed thereon, by the anode oxidation treatment of the part constituting the combustion chamber of an engine;
forming a first silicon-based oxide film (16) by applying, to the top surface (10a) of the anodic oxide film (10), a solvent-typed first pore sealing agent including polysilazane and an organic solvent, and by the polymerization of the polysilazane involving the removal of the organic solvent of the first pore sealing agent; and
forming a second silicon-based oxide film (18) by applying, to the top surface (16a) of the first silicon-based oxide film (16), a non-solvent-typed second pore sealing agent including an alkoxysilane compound represented by the following chemical formula (1) or a partially hydrolyzed condensate thereof, and by the polymerization of at least one of the alkoxysilane compound and the partially hydrolyzed condensate thereof
R¹ₙSi(OR²)₄₋ₙ (1)
wherein in formula (1), R¹ represents a substituted or unsubstituted monovalent hydrocarbon group having 1 to 8 carbon atoms, R² represents an alkyl group having 1 to 4 carbon atoms and n represents an integer of 0 to 3.

2. The method for producing a heat-shielding film according to claim 1, further comprising the step of forming a third silicon-based oxide film (22) by applying, on the top surface (18a) of the second silicon-based oxide film (18), a solvent-typed third pore sealing agent including polysilazane and an organic solvent, by the polymerization of the polysilazane involving the removal of the organic solvent of the third pore sealing agent,
wherein the step of forming the second silicon-based oxide film (18) and the step of forming the third silicon-based oxide film (22) are alternately performed at least once or more; and
the final run of the step of forming the third silicon-based oxide film (22) is performed later than the final run of the step of the forming second silicon-based oxide film (18).

3. The method for producing a heat-shielding film according to claim 2, wherein the polysilazane included in the third pore sealing agent applied in the final run of the step of forming the third silicon-based oxide film (22) is perhydropolysilazane.

## Patentansprüche

1. Verfahren zur Herstellung eines Wärmeabschirmungsfilms, umfassend die Schritte:
Bilden eines anodischen Oxidfilms (10) mit einer oberen Oberfläche (10a), die mit zahlreichen darauf gebildeten Poren (12) versehen ist, durch eine Anodenoxidationsbehandlung eines Teils, der die Brennkammer eines Motors bildet;
Bilden eines ersten Oxidfilms auf Siliciumbasis (16) durch Aufbringen eines ersten Porenversiegelungsmittels vom Lösungsmitteltyp, das Polysilazan und ein organisches Lösungsmittel enthält, auf die obere Oberfläche (10a) des anodischen Oxidfilms (10) und Polymerisation des Polysilazans, umfassend Entfernen des organischen Lösungsmittels des ersten Porenversiegelungsmittels; und
Bilden eines zweiten Oxidfilms auf Siliciumbasis (18) durch Aufbringen eines zweiten Porenversiegelungsmittels vom Nicht-Lösungsmitteltyp, das eine Alkoxysilanverbindung, dargestellt durch die nachstehende chemische Formel (1), oder ein teilweise hydrolysiertes Kondensat davon enthält, auf die obere Oberfläche (16a) des ersten Oxidfilms auf Siliciumbasis (16) und Polymerisation von wenigstens einem von der Alkoxysilanverbindung und dem teilweise hydrolysierten Kondensat davon,
R¹ₙSi(OR²)₄₋ₙ (1)
wobei in Formel (1) R¹ eine substituierte oder unsubstituierte einwertige Kohlenwasserstoffgruppe mit 1 bis 8 Kohlenstoffatomen darstellt, R² eine Alkylgruppe mit 1 bis 4 Kohlenstoffatomen darstellt und n eine ganze Zahl von 0 bis 3 darstellt.

2. Verfahren zur Herstellung eines Wärmeabschirmungsfilms gemäß Anspruch 1, ferner umfassend den Schritt des Bildens eines dritten Oxidfilms auf Siliciumbasis (22) durch Aufbringen eines dritten Porenversiegelungsmittels vom Lösungsmitteltyp, das Polysilazan und ein organisches Lösungsmittel enthält, auf die obere Oberfläche (18a) des zweiten Oxidfilms auf Siliciumbasis (18) und Polymerisation des Polysilazans, umfassend Entfernen des organischen Lösungsmittels des dritten Porenversiegelungsmittels,
wobei der Schritt des Bildens des zweiten Oxidfilms auf Siliciumbasis (18) und der Schritt des Bildens des dritten Oxidfilms auf Siliciumbasis (22) wenigstens einmal oder öfter abwechselnd durchgeführt werden; und
das letzte Ausführen des Schritts des Bildens des dritten Oxidfilms auf Siliciumbasis (22) später als das letzte Ausführen des Schritts des Bildens des zweiten Oxidfilms auf Siliciumbasis (18) durchgeführt wird.

3. Verfahren zur Herstellung eines Wärmeabschirmungsfilms gemäß Anspruch 2, wobei das in dem dritten Porenversiegelungsmittel, das bei dem letzten Ausführen des Schritts des Bildens des dritten Oxidfilms auf Siliciumbasis (22) aufgebracht wird, enthaltene Polysilazan Perhydropolysilazan ist.

## Revendications

1. Procédé de fabrication d'un film de blindage thermique, comprenant les étapes qui consistent à :
former un film d'oxyde anodique (10) comportant une surface supérieure (10a) pourvue de pores innombrables (12) formés sur ladite surface, par un traitement d'oxydation anodique d'une pièce constituant la chambre de combustion d'un moteur ;
former un premier film d'oxyde à base de silicium (16) par application, sur la surface supérieure (10a) du film d'oxyde anodique (10), d'un premier agent de fermeture des pores de type solvant contenant du polysilazane et un solvant organique, et par polymérisation du polysilazane impliquant l'élimination du solvant organique du premier agent de fermeture des pores ; et
former un deuxième film d'oxyde à base de silicium (18) par application, sur la surface supérieure (16a) du premier film d'oxyde à base de silicium (16), d'un deuxième agent de fermeture des pores qui n'est pas de type solvant contenant un composé d'alcoxysilane représenté par la formule chimique suivante (1) ou un condensat partiellement hydrolysé de celui-ci, et par polymérisation d'au moins l'un du composé d'alcoxysilane et du condensat partiellement hydrolysé de celui-ci
R¹ₙSi(OR²)₄₋ₙ (1)
dans lequel, dans la formule (1), R¹ représente un groupe hydrocarboné monovalent substitué ou non substitué comportant 1 à 8 atomes de carbone, R² représente un groupe alkyle comportant 1 à 4 atomes de carbone, et n représente un nombre entier de 0 à 3.

2. Procédé de fabrication d'un film de blindage thermique selon la revendication 1, comprenant en outre l'étape de formation d'un troisième film d'oxyde à base de silicium (22) par application, sur la surface supérieure (18a) du deuxième film d'oxyde à base de silicium (18), d'un troisième agent de fermeture des pores de type solvant contenant du polysilazane et un solvant organique, et par polymérisation du polysilazane impliquant l'élimination du solvant organique du troisième agent de fermeture des pores,
dans lequel l'étape de formation du deuxième film d'oxyde à base de silicium (18) et l'étape de formation du troisième film d'oxyde à base de silicium (22) sont exécutées à tour de rôle au moins une fois ou plus ; et
la dernière exécution de l'étape de formation du troisième film d'oxyde à base de silicium (22) est réalisée plus tard que la dernière exécution de l'étape de formation du deuxième film d'oxyde à base de silicium (18).

3. Procédé de fabrication d'un film de blindage thermique selon la revendication 2, dans lequel le polysilazane présent dans le troisième agent de fermeture des pores appliqué lors de la dernière exécution de l'étape de formation du troisième film d'oxyde à base de silicium (22) est le perhydropolysilazane.
